# EUROPEAN PATENT SPECIFICATION

(11) **EP 3 339 753 B1**
(45) Date of publication and mention of the grant of the patent: **13.11.2024**
(21) Application number: 16306794.5
(22) Date of filing: 22.12.2016
(51) Int. Cl.: F24D 19/10, G05D 23/19

(54) **SYSTEM AND METHOD FOR ENFORCING A MANUAL TEMPERATURE SETPOINT WITHIN A SMART THERMAL MANAGEMENT SYSTEM**
SYSTEM UND VERFAHREN ZUR DURCHSETZUNG EINES MANUELL EINGESTELLTEN TEMPERATURSOLLWERTS IN EINEM INTELLIGENTEN WÄRMEVERWALTUNGSSYSTEM
SYSTÈME ET PROCÉDÉ POUR METTRE EN OEUVRE UN POINT DE RÉGLAGE DE TEMPÉRATURE MANUEL DANS UN SYSTÈME DE GESTION THERMIQUE INTELLIGENT

(43) Date of publication of application: 27.06.2018
(73) Proprietor: Netatmo, 92100 Boulogne Billancourt (FR)
(72) Inventor: GABRIEL, Chadi, 92160 Antony (FR); POTTER, Frédéric, 92200 Neuilly-Sur-Seine (FR); PAOLI, Romain, 92190 Meudon (FR); RAVENTOS, Carlos, 75015 Paris (FR)
(74) Representative: Atout PI Laplace

(56) References cited:
- EP-A1- 2 584 273
- DE-A1- 102011 015 659
- GB-A- 2 501 765
- US-A1- 2010 045 470
- US-A1- 2015 323 200

## Description

### FIELD

The invention relates to the field of smart thermal management of household consumer devices and, in particular, the thermal control within a house. The invention concerns a system and method for enforcing a manual temperature setpoint within an intelligent thermal management system. Although many of the features of this invention will be described in relation to a residential home environment, it is understood that they are generally applicable to many office and industrial building applications or the like as well.

### BACKGROUND

Over the last decades, many products have been introduced in order to control heat emitters within a room or a house. A traditional solution, still widespread, is to perform a room per room heat management inside a building. Each heat emitter is equipped with a valve that regulates the heat flux inside the heat emitter. The valve is either a mechanical valve or a thermostatic valve.

In the case of a mechanical valve, the user adjusts the position of the valve depending on the ambient heat he/she wishes inside the room. If the room comprises a plurality of heat emitters, the user has to adjust the position of each valve, preferably in a compliant way. This often leads to incorrect settings, leading to unapropriate behaviours and additional energy costs.

A thermostatic valve, also called thermostatic radiator valve or TRV, is a self-regulating valve fitted to a hot water heating system radiator, to control the temperature of a room by changing the flow of hot water to the radiator in case of radiator based on hot water technic. Such a valve gradually closes as the temperature of the surrounding area increases, limiting the amount of hot water entering the radiator.

A thermostatic valve allows a better thermal management within a room without a need of manually adapting the position of the valve. It is also possible to program various time slots, each corresponding to a temperature setpoint in the room. For example, the temperature setpoint of each valve may be set at 20°C from 7 am to 11 pm and at 18°C during the night, so as to save energy. To this end, a thermostat can be used to control operation of a central heating system, for example a boiler or more generally a heat generator, and regulate the temperature of one or more rooms by setting a temperature setpoint and monitoring the temperature within the home. If the room temperature falls below the temperature setpoint, the thermostat sends an appropriate signal to operate heating schedule as deemed necessary.

Today, it is well known to use, in combination with thermostatic valves, a variety of communication mediums to enable the thermal control within a room or a house, for example power lines, cabled or wireless networks. The user may perform this thermal control with a connection via the Internet, allowing a further degree of remote control. Such a connection may be realized thanks to a relay that can be driven by the user via a dedicated application or a web application from a PC or another user terminal (i.e. tablet or smart phone) connected to the Internet.

Nevertheless, depending on the configuration of the house and the positioning of heat emitters in relation to one another, as well as the positioning of the thermostat itself, this may result in a non-adapted thermal regulation. Indeed if the thermostat is in the living-room and the temperature setpoint is reached in this room, the boiler may receive from the thermostat an order to stop heating. But the temperature setpoint in the bedroom may not be reached. Since the thermostat sent the order to the boiler to shut down, the circulating water is not hot enough to enable the heat emitter in the bedroom to heat this room up to the temperature setpoint of the bedroom. Despite the predefined temperature setpoint of the bedroom, this temperature may not be reached.

EP2584273A1 relates to a temperature controlling solution. The temperature controlling system comprises an unit for supplying energy to temperatured zones and a central control unit for controlling at least the unit for supplying energy in relation to an amount of energy required in the zones. In the control unit the zones are selected whose amount of energy is considered by the control unit. This reduces the energy consumption of the unit for supplying energy.

GB2501765 discloses an apparatus to control a central heating system and that comprises a relay coupled to the system, a thermostat in wireless communication with the relay, and a server located remotely from the system, i.e. in a separate building. The thermostat determines an ambient temperature and communicates the temperature to the relay. The server receives the temperature from the relay and generates one or more instructions based upon the ambient temperature, which are sent to the relay to control operation of the system. Ideally, the one or more instructions can start/stop a boiler of the system and set desired temperature thresholds of one or more thermostatic radiator valves of respective radiators. The relay may communicate with the server over the internet using a local WiFi router. A user may use a web portal to enter desired objectives of the system on the server, such as desired start times and target temperatures. The server may use other user information, such as GPS tracking of the user or third-party application programming interfaces, to control the system. If communication between the relay and the server fails, the thermostat can resume control of the system.

### SUMMARY OF THE INVENTION

A solution to overcome this inconvenient is to allow an input of a temperature setting at the thermostatic radiator valve to bypass a lower temperature setting at the thermostat. To achieve this result, the invention provides a system and method for enforcing a manual temperature setpoint within a smart thermal management system, thus enabling a better thermal comfort within a room without affecting the performance of the thermal control throughout the building.

To this end, the subject of the invention is a thermostatic radiator valve (TRV) configured to adjust a flow of heating fluid from a heat generator entering a heat emitter in a room having a room temperature based on a temperature setpoint, the heat generator and the heat emitter being configured to heat a building, the TRV comprising communication link to a thermostat controlling the heat generator based on a thermostat temperature setpoint and an input interface configured to allow a user to enter a defined temperature setpoint or acquire the defined temperature setpoint; wherein the TRV is configured to send to the thermostat a command to trigger the heat generator if the defined temperature setpoint is higher than the room temperature and the thermostat has reached the thermostat temperature setpoint. Such a TRV is able to directly trigger the heat generator when a temperature higher than the thermostat temperature setpoint is required in a room. From this, it follows that a user can perform a manual change in the temperature setpoint of a room, thus leading to the triggering of the heat generator previously shut down because of the achievement of the thermostat temperature setpoint.

More generally, the invention relates to a thermostatic radiator valve TRV configured to adjust a flow of heat transfer fluid from a thermal energy generator entering a heat exchanger based on a temperature setpoint, the thermal energy generator and the heat exchanger configured to heat or cool a room with a room temperature, the TRV comprising a communication link to a thermostat controlling the thermal energy generator based on a thermostat temperature setpoint; an input interface configured to allow a user to enter a defined temperature setpoint or acquire the defined temperature setpoint; wherein the TRV is configured to send to the thermostat a command to trigger the thermal energy generator if a difference between the defined temperature setpoint and the room temperature has a same sign as a gradient of temperature to be generated by the thermal energy generator and the thermostat has reached the thermostat temperature setpoint.

Advantageously, in some embodiments, the communication link includes a relay configured to connect to the thermostat, and the TRV is configured to send to the relay the command for the thermostat to trigger the heat generator. The relay can concentrate the data of all TRVs within the house and it may be an access point to have an access to these data. Therefore a user can directly connect to the relay to access to these data.

In an embodiment of the invention, the relay is connected to an internet network to enable the reception of external commands.

The invention also concerns a method for enforcing a manual temperature setpoint using a thermostatic radiator valve (TRV) configured to adjust a flow of heating fluid from a heat generator entering a heat emitter in a room with a room temperature based on a temperature setpoint, the heat generator and the heat emitter being configured to heat a building, the TRV comprising a communication link to a thermostat controlling the heat generator based on a thermostat temperature setpoint; an input interface configured to allow a user to enter a defined temperature setpoint or acquire the defined temperature setpoint; the method comprising the step of sending an order to the thermostat to trigger the heat generator, if the defined temperature setpoint is higher than the room temperature and the thermostat has reached the thermostat temperature setpoint. This method enables to directly trigger the heat generator when a temperature higher than the thermostat temperature setpoint is required in a room.

The invention also concerns a thermostatic radiator valve (TRV) configured to adjust a flow of cooling fluid from a cooling generator entering a cooling emitter in a room having a room temperature based on a temperature setpoint, the cooling generator and the cooling emitter being configured to cool a building, the TRV comprising communication link to a thermostat controlling the cooling generator based on a thermostat temperature setpoint and an input interface configured to allow a user to enter a defined temperature setpoint or acquire the defined temperature setpoint; wherein the TRV is configured to send to the thermostat a command to trigger the heat generator if a difference between the defined temperature setpoint and the room temperature has a same sign as a gradient of temperature to be generated by the thermal energy generator and the thermostat has reached the thermostat temperature setpoint.

### BRIEF DESCRIPTION OF THE DRAWINGS

The accompanying drawings illustrate various non-limiting, example, innovative aspects in accordance with the present descriptions :
- Figure 1 schematically represents a thermostatic radiator valve according to the invention;
- Figure 2 schematically represents an embodiment of the thermostatic radiator valve for enforcing a manual temperature setpoint according to the invention;
- Figure 3 schematically represents another embodiment of the thermostatic radiator valve for enforcing a manual temperature setpoint according to the invention;
- Figure 4 represents a block diagram of the steps of a method for enforcing a manual temperature setpoint according to the invention.

For the sake of clarity, the same elements have the same references in the various figures.

### DETAILED DESCRIPTION

As previously mentioned, although many of the features of this invention are described in relation to a residential home environment, it is understood that they are generally applicable to places where temperature of the room is important such as, for instance, office and industrial buildings.

The invention is described with self-regulating valve fitted to hot water heating system radiator and heat generator like a boiler, but the invention can be applied by analogy to any heat generator (from thermal, geothermal energy) and corresponding valves.

Moreover the invention is described with a thermostatic radiator valve 21 in the field of heating but relates more generally to a thermostatic radiator valve TRV configured to adjust a flow of heat transfer fluid from a thermal energy generator entering a heat exchanger based on a temperature setpoint, the thermal energy generator and the heat exchanger configured to heat or cool a room with a room temperature, the TRV comprising a communication link to a thermostat controlling the thermal energy generator based on a thermostat temperature setpoint; an input interface configured to allow a user to enter a defined temperature setpoint or acquire the defined temperature setpoint; wherein the TRV is configured to send to the thermostat a command to trigger the thermal energy generator if a difference between the defined temperature setpoint and the room temperature has a same sign as a gradient of temperature to be generated by the thermal energy generator and the thermostat has reached the thermostat temperature setpoint.

In the following, the invention will be described with the heat transfer fluid being a heating fluid, the heat exchanger being a heat emitter and the thermal energy generator being a heat generator. But the heat transfer fluid can also be a cooling fluid, the heat exchanger a cooling emitter and the thermal energy generator a cooling generator.

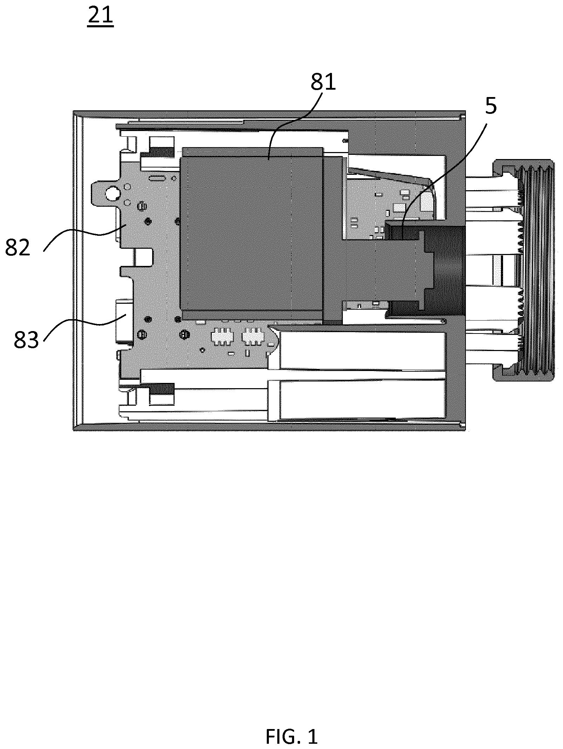

Figure 1 schematically represents a thermostatic radiator valve 21 according to the invention. The thermostatic valve 21 comprises a motor 81, an electronic board 82. In an embodiment, the thermostatic radiator valve 21 may comprise a temperature sensor 83. The motor 81 may be replaced by any other system able to reduce the fluid flow in the heat emitter.

The thermostatic radiator valve (TRV) 21 is a self-regulating valve fitted to a heating fluid from a heat generator entering a heat emitter (or radiator) to which the TRV 21 is connected. The TRV 21 may include a memory to store some data such as a temperature setpoint. Depending on the surrounding temperature measured by a temperature sensor 83 and a temperature setpoint of the TRV 21, an electronic board 82 comprising a calculator may activate the motor 81 to mechanically adapt the aperture 5 of the TRV 21. Such a TRV 21 gradually closes as the temperature of the surrounding area increases, limiting the amount of heating fluid entering the heat emitter.

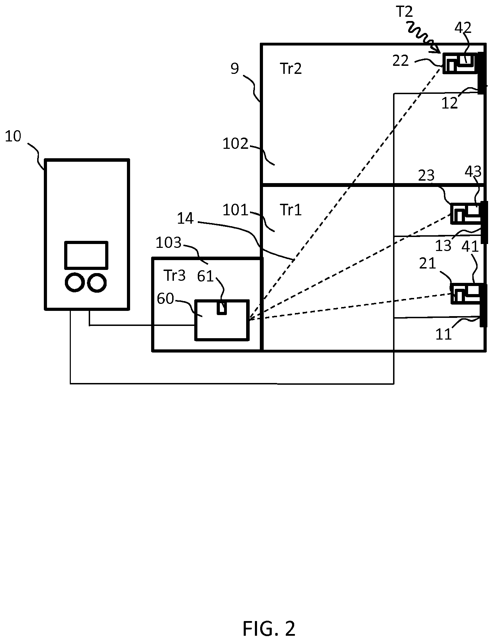

Figure 2 schematically represents an embodiment of the thermostatic radiator valve 21 for enforcing a manual temperature setpoint according to the invention. A heat generator 10 and a heat emitter 11 are configured to heat a building 9. The TRV 21, stored in a room 101 with a room temperature Tr1 is configured to adjust the flow of heating fluid from the heat generator 10 entering the heat emitter 11 based on a temperature setpoint. The TRV 21 comprises a communication link 41 to a thermostat 60 controlling the heat generator 10 based on a thermostat temperature setpoint 61. The communication link 41 may be performed through a wired or radio connection 14 such as Zigbee, Wi-Fi, Bluetooth^{™}....

The TRV 21 comprises an input interface configured to allow a user to enter a defined temperature setpoint or acquire the defined temperature setpoint T2 from a user terminal connected to the connection 14 to which the TRV and the thermostat are connected. According to the invention, the TRV is configured to send to the thermostat 60 a command to trigger the heat generator 10, if a difference between the defined temperature setpoint T2 and the room temperature Tr1 has a same sign as a gradient of temperature to be generated by the thermal energy generator and the thermostat 60 has reached the thermostat temperature setpoint 61. The gradient of temperature indicates the evolution of the temperature. It is positive in case of a temperature increase. A positive temperature gradient means that the thermal energy generator should operate so as to increase the temperature (i.e the thermal energy generator generates a positive temperature gradient). A negative temperature gradient means that the thermal energy generator should operate so as to decrease the temperature (i.e the thermal energy generator generates a negative temperature gradient). In other words, in the case of a heat generator (configured to generate a positive temperature gradient), the TRV sends to the thermostat 60 the command to trigger the heat generator 10 if the defined temperature setpoint T2 is higher than the room temperature Tr1 (i.e. the difference between T2 and Tr1 is positive) and the thermostat 60 has reached the thermostat temperature setpoint 61. In the case of a cooling generator (configured to generate a negative temperature gradient), the TRV sends to the thermostat 60 the command to trigger the cooling generator if the defined temperature setpoint T2 is lower than the room temperature Tr1 (i.e. the difference between T2 and Tr1 is negative) and the thermostat 60 has reached the thermostat temperature setpoint 61.

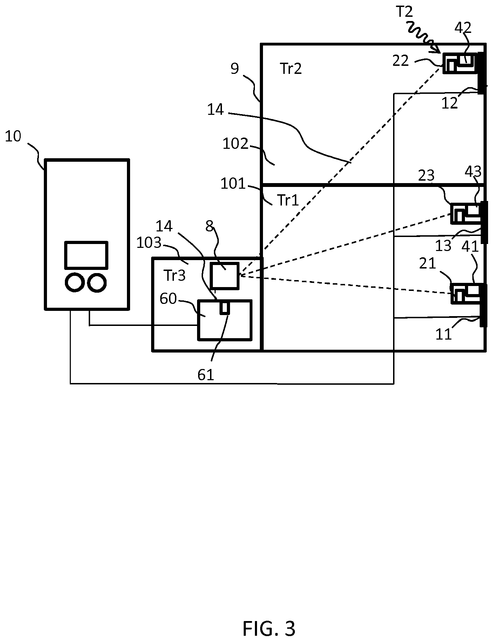

In schematic representation in figures 2 and 3, the thermostat 60 is located in a third room 103, that is to say a room where there are no TRV, to better illustrate the enforcing of the manual temperature setpoint, also called the activation of the manual boost. Of course, the invention works also in a case with a thermostat placed in the same room where there is a TRV.

The advantage of such a TRV is to allow a user to heat up a room by enabling the TRV in this room to trigger the heat generator 10 directly, even if the thermostat temperature setpoint is achieved. Indeed, in such a case, having achieved its thermostat temperature setpoint (i.e. Tr1 is higher than 61), the thermostat normally orders the heat generator 10 to shut down because no further heating in this room is needed. Thanks to the TRV of the invention, a user is able to impose via the input interface of the TRV a new defined temperature setpoint T2 to the TRV in this room. Should this new defined temperature setpoint T2 be higher than the measured temperature in the room where T2 is imposed, the TRV sends a command to the thermostat 60 to trigger the heat generator 10 previously shut down, and this even if the thermostat temperature setpoint 61 is achieved in this room.

In other words, the TRV 21 is able to trigger the heat generator 10 if the new defined temperature setpoint T2 input to the TRV 21 requires a heating up of the room, that is to say if the defined temperature setpoint T2 is higher than the room temperature Tr1 and the thermostat 60 has reached the thermostat temperature setpoint 61.

It may be considered that the thermostat 60 has reached its temperature setpoint when it is no more regulating (i. e. TR1 is much higher than 61). In addition note that the defined temperature setpoint can be lower than the thermostat temperature setpoint 61 and activate the manual boost if the thermostat was no more regulating.

The same applies to the TRV 23 in the same room as the TRV 21 and to the TRV 22 in another room. It is of particular interest when a user inputs a new defined temperature setpoint T2 at the TRV 22 in the room 102. In this configuration, the room temperature Tr1 of the room 101 is equal to the thermostat temperature 61. Therefore there is no need to heat up the room further and the heat generator 10 is shut down. The condition is fulfilled for the TRV 22 to send to the thermostat 60 a command to trigger the heat generator 10 when the defined temperature setpoint T2 to the TRV 23 is higher than the room temperature Tr2 and the thermostat 60 has reached the thermostat temperature setpoint 61.

In an example of application, the TRV according to the invention enables to enforce a manual temperature setpoint T2 within a house 9 comprising at least a first, a second and a third room 101, 102, 103, each room having a real temperature Tr1, Tr2, Tr3 and a thermostat temperature setpoint 61. The thermostat 60 is for example located in the third room 103 and configured to communicate a heat generator parameter to the heat generator 10 to control the heat generator 10 for sending a flow of heating fluid to heat up each room or turning the heat generator off according to the real temperature Tr3 and the thermostat temperature setpoint 61 of the third room 103. There are a plurality of heat emitters 11, 12, 13 located in the first and second rooms, capable of receiving the flow of heating fluid from the heat generator 10, and a plurality of TRVs 21, 22, 23, one of the plurality of TRVs being connected to one of the plurality of heat emitters 11, 12, 13. Thanks to the invention, one of the plurality of TRVs 22 in the second room 102 is configured to send to the thermostat 60 thanks to its communication link 42 via the dedicated network 14 a heat generator parameter intended to trigger the turned off heat generator 10 when a manual temperature setpoint T2 imposed to one of the plurality of heat emitters 12 of the second room 102 is higher than the room temperature Tr2 and the thermostat 60 has reached the thermostat temperature setpoint 61.

Figure 3 schematically represents another embodiment of the thermostatic radiator valve for enforcing a manual temperature setpoint according to the invention. In this embodiment, the communication link 41, 42, 43 of the TRV 21, 22, 23 includes a relay 8 configured to connect to the thermostat 60, and the TRV is configured to send to the relay 8 the command for the thermostat 60 to trigger the heat generator 10. The relay 8 may be connected to the TRVs through a wired or radio connection 14 such as Zigbee, Wi-Fi, Bluetooth... Also the relay 8 may be connected to the thermostat 60 through the same or another wired or wireless connection.

In an embodiment, the relay 8 is connected to an internet network that enables the reception of commands external to the system.

In this embodiment, the relay 8 enables to concentrate the data from the TRVs. A TRV according to the invention may comprise a memory to store its own data like for example its temperature setpoint, the new defined temperature setpoint T2, but also data from the one or more other TRVs. The relay 8 can concentrate the data of all the TRVs. This feature presents the advantage of the possibility for a user to connect, for example, his smartphone to the relay 8 via a wired or wireless connection (Bluetooth, Wi-Fi, ...) and check data of all TRVs at one sight. This may help the user to take a decision to input a new defined temperature setpoint T2.

As an example, in the case where the relay is coupled to the internet network, a user can sit in the room 101 and be under the impression that he is cold. Without moving, he/she can check the temperature setpoint of each TRV of the house by connecting his smartphone to the relay 8. He may notice on his smartphone that the temperature setpoint of the TRVs 21, 23 in the room 101 is 20°C, the thermostat temperature setpoint is 20°C and the temperature setpoint of the TRV 22 in the room 102 is 21 °C. Therefore, the heat generator 10 is off since the thermostat temperature setpoint of 20 °C is achieved. Knowing these temperature setpoints and due to his impression of being cold, the user may want to input a new defined temperature setpoint T2 at 22°C to the TRV 23 in the room 101 where he is. Since the new defined temperature setpoint T2 (22°C) is higher than the room temperature Tr1 and the thermostat temperature setpoint (20°C), and even if the room temperature is already at 20°C, the TRV 23 sends to the thermostat 60 the command to trigger the heat generator 10 to achieve the new defined temperature setpoint of 22°C in the room 101. The command sent to the thermostat 60 by the TRV 23 may transit through the relay connected to the thermostat 60.

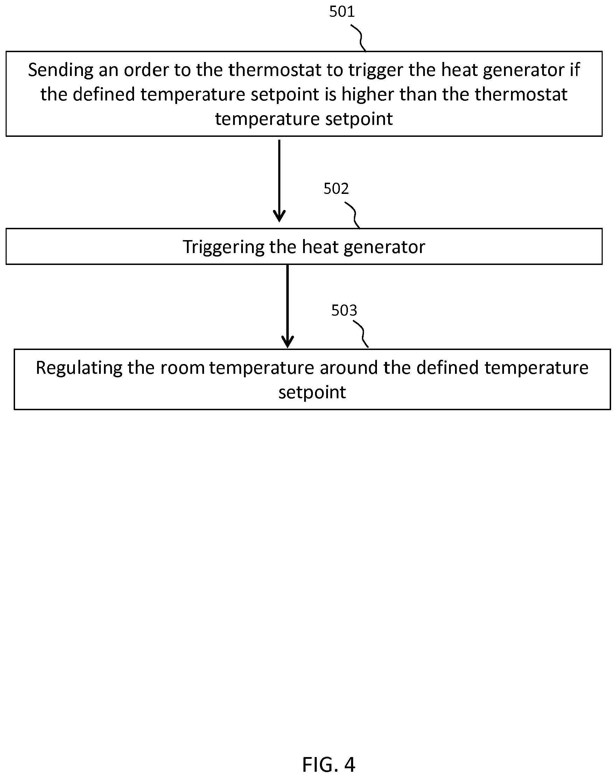

Figure 4 represents a block diagram of the steps of a method for enforcing a manual temperature setpoint according to the invention. The method for enforcing a manual temperature setpoint uses a thermostatic radiator valve (TRV) 21, as described before, configured to adjust a flow of heating fluid from a heat generator 10 entering a heat emitter 11 in a room 101 with a room temperature Tr1 based on a temperature setpoint, the heat generator 10 and the heat emitter 11 configured to heat a building 9, the TRV 21 comprising a communication link 41 to a thermostat 60 controlling the heat generator 10 based on a thermostat temperature setpoint 61, an input interface configured to allow a user to enter a defined temperature setpoint T2 or acquire the defined temperature setpoint. According to the invention, the method comprises the step 501 of sending an order to the thermostat 60 to trigger the heat generator 10 if the defined temperature setpoint T2 is higher than the room temperature Tr1 (or more generally if a difference between the defined temperature setpoint T2 and the room temperature Tr1 has a same sign as a gradient of temperature to be generated by the thermal energy generator) and the thermostat 60 has reached the thermostat temperature setpoint 61.

The method according to the invention further comprises the step 503 of regulating the room temperature Tr1 around the defined temperature setpoint T2.

With a TRV 21 having a communication link 41 comprising a relay 8 connected to the thermostat, as presented in Figure 3, the step 501 may vary. The TRV 21 may send the order to the relay 8 connected to the thermostat 60. In this embodiment, the relay 8 is able to concentrate the commands from all the TRVs 21, 22, 23 and distribute them to the thermostat 60.

The invention enables the TRVs 21, 22, 23 to send a request to the thermostat 60 to trigger the heat generator 10, bypassing the thermostat temperature setpoint 61. This is of particular interest in order to respond to a specific and, possibly urgent, need of a user for heating up a room.

The invention was mainly described in the field of heating but the invention applies in the field of cooling as well. The invention also concerns a TRV 21, 22, 23 configured to adjust a flow of cooling fluid from a cooling generator 10 entering a cooling emitter 11, 12, 13 based on a temperature setpoint, the cooling generator 10 and the cooling emitter 11, 12, 13 configured to cool a room 101 with a room temperature Tr1, the TRV 21, 22, 23 comprising a communication link 41, 42, 43 to a thermostat 60 controlling the heat/cooling generator 10 based on a thermostat temperature setpoint 61; an input interface configured to allow a user to enter a defined temperature setpoint or acquire the defined temperature setpoint T2; wherein the TRV 21, 22, 23 is configured to send to the thermostat 60 a command to trigger the cooling generator 10 if the defined temperature setpoint T2 is lower than the room temperature Tr1 and the thermostat 60 has reached the thermostat temperature setpoint 61.

The examples disclosed in this specification are only illustrative of some embodiments of the invention. They do not in any way limit the scope of said invention which is defined by the appended claims and can be for instance applied to various domain such as heating and cooling one or various rooms, or even one or more buildings.

## Claims

1. A thermostatic radiator valve (TRV) (21, 22, 23) configured to adjust a flow of heat transfer fluid from a thermal energy generator (10) configured to heat or cool a room of a building, said heat transfer fluid entering a heat exchanger (11, 12, 13) based on a defined temperature setpoint from a user, the thermal energy generator (10) and the heat exchanger (11, 12, 13) configured to heat or cool a room (101) of the building, the thermostatic radiator valve (TRV) being adapted to be situated in the room, the room having a room temperature (Tr1), the TRV (21, 22, 23) comprising:
- a communication link (41, 42, 43) to a thermostat (60) controlling the thermal energy generator (10) for the building based on a thermostat temperature setpoint (61);
- an input interface configured to allow a user to enter the defined temperature setpoint or acquire the defined temperature setpoint (T2);
**characterized in that** the TRV (21, 22, 23) is configured to send to the thermostat (60) a command to directly trigger the turned off thermal energy generator (10) if a difference between the defined temperature setpoint (T2) and the room temperature (Tr1) has a same sign as a gradient of temperature to be generated by the thermal energy generator and if the thermostat (60) has reached the thermostat temperature setpoint (61) in the room.

2. The TRV (21, 22, 23) according to claim 1, wherein the communication link (41, 42, 43) includes a relay (8) configured to connect to the thermostat (60), and the TRV (21, 22, 23) is configured to send to the relay (8) the command for the thermostat (60) to trigger the thermal energy generator (10).

3. The TRV (21, 22, 23) according to claim 2, wherein the relay (8) is connected to an internet network.

4. The TRV (21, 22, 23) according to claims 1 to 3, wherein the heat transfer fluid is a heating fluid, the heat exchanger is a heat emitter and the thermal energy generator is a heat generator.

5. The TRV (21, 22, 23) according to claims 1 to 3, wherein the heat transfer fluid is a cooling fluid, the heat exchanger is a cooling emitter and the thermal energy generator is a cooling generator.

6. The TRV (21, 22, 23) according to claim 2 or claim 3, wherein the thermostat (60) is connected to a smartphone to trigger the thermal energy generator (10).

7. A method for enforcing a manual temperature setpoint using a thermostatic radiator valve (TRV) (21, 22, 23) configured to adjust a flow of heat transfer fluid from a thermal energy generator (10) configured to heat or cool a room of a building, said heat transfer fluid entering a heat exchanger (11, 12, 13) based on a defined temperature setpoint from a user, the thermal energy generator (10) and the heat exchanger (11, 12, 13) configured to heat or cool a room (101) of the building, the thermostatic radiator valve (TRV) being situated in the room, the room having a room temperature (Tr1), the TRV (21, 22, 23) comprising:
- a communication link (41, 42, 43) to a thermostat (60) controlling the thermal energy generator (11, 12, 13) for the building based on a thermostat temperature setpoint (61);
- an input interface configured to allow a user to enter the defined temperature setpoint (T2) or acquire the defined temperature setpoint;
**characterized in that** the method further comprises the following step:
- sending, by the thermostatic radiator valve directly to the thermostat (60), an order (step 501) to directly trigger the turned off thermal energy generator (10) if a difference between the defined temperature setpoint (T2) and the room temperature (Tr1) has a same sign as a gradient of temperature to be generated by the thermal energy generator and if the thermostat (60) has reached the thermostat temperature setpoint (61) in the room.

8. The method according to claim 7, further comprising the step (503) of regulating the room temperature (Tr1) around the defined temperature setpoint (T2).

## Patentansprüche

1. Thermostatisches Heizkörperventil (TRV) (21, 22, 23), das dafür konfiguriert ist, einen Strom von Wärmeübertragungsfluid aus einem Wärmeenergieerzeuger (10) einzustellen, der dafür konfiguriert ist, einen Raum eines Gebäudes zu heizen oder zu kühlen, wobei das Wärmeübertragungsfluid auf Grundlage eines definierten Temperatursollwerts von einem Benutzer in einen Wärmetauscher (11, 12, 13) eintritt, wobei der Wärmeenergieerzeuger (10) und der Wärmetauscher (11, 12, 13) dafür konfiguriert sind, einen Raum (101) des Gebäudes zu heizen oder zu kühlen, wobei das thermostatische Heizkörperventil (TRV) angepasst ist, um sich in dem Raum zu befinden, wobei der Raum eine Raumtemperatur (Tr1) aufweist, wobei das TRV (21, 22, 23) Folgendes umfasst:
- eine Kommunikationsverbindung (41, 42, 43) zu einem Thermostaten (60), der den Wärmeenergieerzeuger (10) für das Gebäude auf Grundlage eines Thermostat-Temperatursollwerts (61) steuert;
- eine Eingabeschnittstelle, die dafür konfiguriert ist, es einem Benutzer zu ermöglichen, den definierten Temperatursollwert einzugeben oder den definierten Temperatursollwert (T2) zu erfassen;
**dadurch gekennzeichnet, dass**
das TRV (21, 22, 23) dafür konfiguriert ist, an den Thermostaten (60) einen Befehl zu senden, um den ausgeschalteten Wärmeenergieerzeuger (10) unmittelbar zu aktivieren, falls eine Differenz zwischen dem definierten Temperatursollwert (T2) und der Raumtemperatur (Tr1) ein gleiches Vorzeichen aufweist wie ein Temperaturgradient, der durch den Wärmeenergieerzeuger zu erzeugen ist, und falls der Thermostat (60) den Thermostat-Temperatursollwert (61) in dem Raum erreicht hat.

2. TRV (21, 22, 23) nach Anspruch 1, wobei die Kommunikationsverbindung (41, 42, 43) ein Relais (8) einschließt, das dafür konfiguriert ist, sich mit dem Thermostaten (60) zu verbinden, und das TRV (21, 22, 23) dafür konfiguriert ist, an das Relais (8) den Befehl für den Thermostaten (60) zu senden, um den Wärmeenergieerzeuger (10) zu aktivieren.

3. TRV (21, 22, 23) nach Anspruch 2, wobei das Relais (8) mit einem Internetnetz verbunden ist.

4. TRV (21, 22, 23) nach einem der Ansprüche 1 bis 3, wobei das Wärmeübertragungsfluid ein Heizfluid ist, der Wärmetauscher ein Wärmeemitter ist und der Wärmeenergieerzeuger ein Wärmeerzeuger ist.

5. TRV (21, 22, 23) nach einem der Ansprüche 1 bis 3, wobei das Wärmeübertragungsfluid ein Kühlfluid ist, der Wärmetauscher ein Kühlemitter ist und der Wärmeenergieerzeuger ein Kühlungserzeuger ist.

6. TRV (21, 22, 23) nach Anspruch 2 oder Anspruch 3, wobei der Thermostat (60) mit einem Smartphone verbunden ist, um den Wärmeenergieerzeuger (10) zu aktivieren.

7. Verfahren zum Durchsetzen eines manuellen Temperatursollwerts unter Verwendung eines thermostatischen Heizkörperventils (TRV) (21, 22, 23), das dafür konfiguriert ist, einen Strom von Wärmeübertragungsfluid aus einem Wärmeenergieerzeuger (10) einzustellen, der dafür konfiguriert ist, einen Raum eines Gebäudes zu heizen oder zu kühlen, wobei das Wärmeübertragungsfluid auf Grundlage eines definierten Temperatursollwerts von einem Benutzer in einen Wärmetauscher (11, 12, 13) eintritt, wobei der Wärmeenergieerzeuger (10) und der Wärmetauscher (11, 12, 13) dafür konfiguriert sind, einen Raum (101) des Gebäudes zu heizen oder zu kühlen, wobei sich das thermostatische Heizkörperventil (TRV) in dem Raum befindet, wobei der Raum eine Raumtemperatur (Tr1) aufweist, wobei das TRV (21, 22, 23) Folgendes umfasst:
- eine Kommunikationsverbindung (41, 42, 43) zu einem Thermostaten (60), der den Wärmeenergieerzeuger (11, 12, 13) für das Gebäude auf Grundlage eines Thermostat-Temperatursollwerts (61) steuert;
- eine Eingabeschnittstelle, die dafür konfiguriert ist, es einem Benutzer zu ermöglichen, den definierten Temperatursollwert (T2) einzugeben oder den definierten Temperatursollwert zu erfassen;
**dadurch gekennzeichnet, dass** das Verfahren ferner den folgenden Schritt umfasst:
- Senden, durch das thermostatische Heizkörperventil unmittelbar an den Thermostaten (60), eines Befehls (Schritt 501), um den ausgeschalteten Wärmeenergieerzeuger (10) unmittelbar zu aktivieren, falls eine Differenz zwischen dem definierten Temperatursollwert (T2) und der Raumtemperatur (Tr1) ein gleiches Vorzeichen aufweist wie ein Temperaturgradient, der durch den Wärmeenergieerzeuger zu erzeugen ist, und falls der Thermostat (60) den Thermostat-Temperatursollwert (61) in dem Raum erreicht hat.

8. Verfahren nach Anspruch 7, das ferner den Schritt (503) des Regulierens der Raumtemperatur (Tr1) um den definierten Temperatursollwert (T2) umfasst.

## Revendications

1. Vanne de radiateur thermostatique (TRV) (21, 22, 23) configurée pour ajuster un écoulement d'un fluide caloporteur provenant d'un générateur d'énergie thermique (10) configuré pour chauffer ou refroidir une pièce d'un immeuble, ledit fluide caloporteur entrant dans un échangeur de chaleur (11, 12, 13) sur la base d'un point de consigne de température défini par un utilisateur, le générateur d'énergie thermique (10) et l'échangeur de chaleur (11, 12, 13) étant configurés pour chauffer ou refroidir une pièce (101) de l'immeuble, la vanne de radiateur thermostatique (TRV) étant adaptée pour être située dans la pièce, la pièce ayant une température de pièce (Tr1), la TRV (21, 22, 23) comprenant :
- une liaison de communication (41, 42, 43) à un thermostat (60) commandant le générateur d'énergie thermique (10) pour l'immeuble sur la base d'un point de consigne de température de thermostat (61) ;
- une interface d'entrée configurée pour permettre à un utilisateur d'entrer le point de consigne de température défini ou d'acquérir le point de consigne de température défini (T2) ;
**caractérisée en ce que**
la TRV (21, 22, 23) est configurée pour envoyer au thermostat (60) un ordre pour activer directement le générateur d'énergie thermique éteint (10) si une différence entre le point de consigne de température défini (T2) et la température de pièce (Tr1) a le même signe qu'un gradient de température à générer par le générateur d'énergie thermique et si le thermostat (60) a atteint le point de consigne de température de thermostat (61) dans la pièce.

2. TRV (21, 22, 23) selon la revendication 1, dans laquelle la liaison de communication (41, 42, 43) inclut un relais (8) configuré pour se connecter au thermostat (60), et la TRV (21, 22, 23) est configurée pour envoyer au relais (8) l'ordre pour le thermostat (60) d'activer le générateur d'énergie thermique (10).

3. TRV (21, 22, 23) selon la revendication 2, dans laquelle le relais (8) est connecté à un réseau Internet.

4. TRV (21, 22, 23) selon les revendications 1 à 3, dans laquelle le fluide caloporteur est un fluide chauffant, l'échangeur de chaleur est un émetteur de chaleur et le générateur d'énergie thermique est un générateur de chaleur.

5. TRV (21, 22, 23) selon les revendications 1 à 3, dans laquelle le fluide caloporteur est un fluide de refroidissement, l'échangeur de chaleur est un émetteur de refroidissement et le générateur d'énergie thermique est un générateur de refroidissement.

6. TRV (21, 22, 23) selon la revendication 2 ou la revendication 3, dans laquelle le thermostat (60) est connecté à un smartphone pour activer le générateur d'énergie thermique (10).

7. Procédé pour faire appliquer un point de consigne de température manuel à l'aide d'une vanne de radiateur thermostatique (TRV) (21, 22, 23) configurée pour ajuster un écoulement d'un fluide caloporteur provenant d'un générateur d'énergie thermique (10) configuré pour chauffer ou refroidir une pièce d'un immeuble, ledit fluide caloporteur entrant dans un échangeur de chaleur (11, 12, 13) sur la base d'un point de consigne de température défini par un utilisateur, le générateur d'énergie thermique (10) et l'échangeur de chaleur (11, 12, 13) étant configurés pour chauffer ou refroidir une pièce (101) de l'immeuble, la vanne de radiateur thermostatique (TRV) étant située dans la pièce, la pièce ayant une température de pièce (Tr1), la TRV (21, 22, 23) comprenant :
- une liaison de communication (41, 42, 43) à un thermostat (60) commandant le générateur d'énergie thermique (11, 12, 13) pour l'immeuble sur la base d'un point de consigne de température de thermostat (61) ;
- une interface d'entrée configurée pour permettre à un utilisateur d'entrer le point de consigne de température défini (T2) ou d'acquérir le point de consigne de température défini ;
**caractérisé en ce que** le procédé comprend en outre l'étape suivante :
- l'envoi, par la vanne de radiateur thermostatique directement au thermostat (60) d'une ordre (étape 501) pour activer directement le générateur d'énergie thermique éteint (10) si une différence entre le point de consigne de température défini (T2) et la température de pièce (Tr1) a le même signe qu'un gradient de température à générer par le générateur d'énergie thermique et si le thermostat (60) a atteint le point de consigne de température de thermostat (61) dans la pièce.

8. Procédé selon la revendication 7, comprenant en outre l'étape (503) de régulation de la température de pièce (Tr1) autour du point de consigne de température défini (T2).
